# EUROPEAN PATENT SPECIFICATION

(11) **EP 4 060 439 B1**
(45) Date of publication and mention of the grant of the patent: **19.11.2025**
(21) Application number: 21163684.0
(22) Date of filing: 19.03.2021
(51) Int. Cl.: G05B 19/418, B25J 9/16

(54) **SYSTEM AND METHOD FOR FEEDING CONSTRAINTS IN THE EXECUTION OF AUTONOMOUS SKILLS INTO DESIGN**
SYSTEM UND VERFAHREN ZUR EINFÜHRUNG VON BESCHRÄNKUNGEN BEI DER AUSFÜHRUNG AUTONOMER FÄHIGKEITEN IN DAS DESIGN
SYSTÈME ET PROCÉDÉ D'INTRODUCTION DE CONTRAINTES LORS DE L'EXÉCUTION DE COMPÉTENCES AUTONOMES DANS LA CONCEPTION

(43) Date of publication of application: 21.09.2022
(73) Proprietor: Siemens Aktiengesellschaft, 80333 München (DE)
(72) Inventor: APARICIO OJEA, Juan L., Moraga, CA 94556 (US); CLAUSSEN, Heiko, Wayland, MA 01778 (US); UGALDE DIAZ, Ines, Belmont, CA 94002 (US); SHAHAPURKAR, Yash, Berkeley, CA 94704 (US); SOLOWJOW, Eugen, Berkeley, CA 94709 (US); WEN, Chengtao, Redwood City, CA 94065 (US); XIA, Wei Xi, Daly City, CA 94015 (US); SATHYA NARAYANAN, Gokul Narayanan, Worcester, MA 01609 (US); TAMASKAR, Shashank, Davis, CA 95618 (US)
(74) Representative: Isarpatent

(56) References cited:
- US-A- 5 523 960
- US-A1- 2019 171 190
- US-A1- 2020 319 630

## Description

### TECHNICAL FIELD

The present disclosure relates generally to autonomous systems, and in particular, to a method and apparatus for designing execution of a process by a robotic cell based on constraints in the execution of autonomous skills.

### BACKGROUND

The requirement to manage rapid innovation cycles, complex customization requirements, and growing cost pressures in a global and highly competitive landscape presents a growing challenge to traditional industrial automation systems. This challenge is motivating a trend for manufacturers to gradually transition from automation to autonomy. In contrast to automation, autonomy gives each asset on the factory floor the decision-making and self-controlling abilities to act independently in the event of local issues.

US 2020/319630 A1 describes a system for generating control code for robotic manufacturing. A user interface allows for the selection and combination of virtual components, and a simulator verifies the resulting control data using a virtual model of the robotic cell. The validated control code can then be used to operate physical robots for manufacturing a product.

US 5523960 A relates to a method for evaluating assembly sequences. Starting from a product structure, an AND/OR graph is generated to represent possible assembly options. Invalid sequences are excluded based on assigned weights, and valid sequences are evaluated against predefined criteria to determine suitable assembly strategies.

US 2019/171190 A1 describes a cyber-physical production system that utilizes so-called "skills" to control automation components. Skills represent abstract requirements for transforming a workpiece and are executed by assigned behavioral descriptions that may include both physical and computational actions. Skill instances can be used for planning, simulation, and optimization of production processes.

In the context of autonomous systems, machine instructions may be abstracted into skills, such as object grasping or placement. These skills can be combined to generate suitable context-aware application procedures.

The industrial use cases for autonomous systems on a factory floor are expected to be widespread and cover a large range of application scenarios. In some use cases, this may involve the need to reduce or even remove human involvement. In other scenarios, autonomous machines may augment factory workers' physical and intellectual abilities. This development is a core enabling technology for flexible manufacturing operations as envisioned in the context of Industry 4.0.

Flexibility often comes at the price of speed. It is desirable to be able to make informed decisions in the design and commissioning of autonomous systems on a factory floor to optimize performance when constraints (e.g., speed/throughput) are added.

### SUMMARY

Briefly, aspects of the present disclosure are directed to a technique for feeding constraints in the execution of autonomous skills into designing an execution of a process by a robotic cell.

The present invention relates to a computer-implemented method and a system for designing execution of a process by a robotic cell with the features of the independent claims. Further advantageous embodiments are subject-matter of the dependent claims.

A first aspect provides a computer-implemented method for designing execution of a process by a robotic cell according to claim 1.

Other aspects of the present disclosure implement features of the above-described method in a non-transitory computer-readable storage medium according to claim 10 and a computer program product according to claim 11.

Yet another aspect provides a system for designing execution of a process by a robotic cell according to claim 12.

Additional technical features and benefits may be realized through the techniques of the present disclosure. Embodiments and aspects of the disclosure are described in detail herein and are considered a part of the claimed subject matter. For a better understanding, refer to the detailed description and to the drawings.

### BRIEF DESCRIPTION OF THE DRAWINGS

The foregoing and other aspects of the present disclosure are best understood from the following detailed description when read in connection with the accompanying drawings. To easily identify the discussion of any element or act, the most significant digit or digits in a reference number refer to the figure number in which the element or act is first introduced.
FIG. 1 is a schematic block diagram illustrating a system in accordance with an example embodiment.
FIG. 2 is an illustrative example showing a baseline design of a robotic cell for executing a process of packaging bottles.
FIG. 3 illustrates an example of a design spectrum evaluated by the system based on the process goal of FIG. 2.
FIG. 4 illustrates one example of a recommended design of the robotic cell for carrying out the same process goal as in FIG. 2.
FIG. 5 illustrates a computing environment in accordance with an example embodiment.

### DETAILED DESCRIPTION

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

Aspects of the present disclosure relate to autonomous systems. Autonomy gives each asset on the factory floor the decision-making and self-controlling abilities to act independently in the event of local issues. In conventional automation, an automated robot is typically programmed to perform a single, repetitive task, such as positioning a car panel in exactly the same place on each vehicle. In this case, an engineer is usually involved in programming an entire task from start to finish, typically utilizing low-level code to generate individual commands. In contrast, in an autonomous system, an autonomous machine or robot is programmed at a higher level of abstraction using skills instead of individual commands.

In the context of programming an autonomous machine, a skill is represented by an individual programming block (also referred to as skill code), which comprises a functional description for using a robot to interact with a physical environment to perform a specific skill objective. A skill may have both, a functional, as well as a structural component. Skills are derived for higher-level abstract behaviors centered on how the environment is to be modified by the programmed robot. Illustrative examples of skills that may be implemented using the techniques described herein include a skill to open a door, a skill to detect an object, a skill to grasp and pick an object, a skill to place an object, and so on. A skill may be designated by activating it as a function within the programming environment. This may be performed, for example, by calling the skill function as part of a device service. Once activated, the skill function reads out structural information from the physical environment to determine its operation.

The mechanical design and apparatus of a robotic cell has deep implications on the speed and type of autonomous skills that it can support. In other words, software defined autonomous skills can dramatically increase the cell's success rate and throughput if aided by mechanical constructs. These constructs can be in the form of devices/components of the robotic cell, such as fixtures, feeders, gripper designs, etc., as well as the geometrical layout of the cell. The two dimensions of designing execution of a process, namely skills (software) used and mechanical design, are highly related and an optimal design cannot only be done in one of them.

The state of the art leaves a gap in linking autonomous skills with other aspects of the production cell or product design. For example, if one of the skills is a "Picking" skill, existing systems would provide the necessary programming or configuration steps to make sure the robot can indeed pick the object. However, there is no link to other aspects outside the robot, camera, gripper trio. If the throughput needs to be increased or if the system experiences too many errors, a system integrator would have to be involved to improve the overall design of the cell. Alternately, the product design team would need to be involved and modify the product design. Or alternately, the company that programmed the skills would need to reprogram them again, retraining their algorithms with a different set of images. In all these cases, delays and potential downtimes are introduced, and decision are done in silos. Even if the human is the ultimate designer of the product or the cell, the information nowadays is stored in silos. The design team doesn't have any visibility on the capabilities of the autonomous machine skills. The system integrator may get some constraints on reach and the way to input and output material, but they are not necessarily aware of the consequences of their design decisions. For example, "a picking from a box" skill may work fine if the system just needs to drop the objects in a different box or bin but may not work optimally if the picked object needs to be inserted precisely. As another example: if orientation is required, two robot arms can perform the task if a "hand over skill" is available, but it may come to the price of speed and cost. A fixture that can help the robot rotate the object may reduce cost (no need for a second arm). If throughput is the constraint, a different feeder may be the solution. All these constraints make the work of the system integrators challenging.

Embodiments of the present disclosure address the problem of using autonomous skill performance as feedback in the mechanical design of a robotic cell, and in some embodiments, in product design and/or other engineering steps, such as the training of a machine-learning model.

Currently, there are efforts to create digital twins of product and operations of traditional automation deployments in order to close the loop between design and operation. The disclosed embodiments go a step forward and add the autonomy dimension, which adds flexibility to the system but also unpredictability and the need for a tighter coupling with physical devices in the robotic cell. The disclosed embodiments leverage high-fidelity simulation to arrive at better robotic cell design taking into account the constraints that would be specified at the time of commissioning of the robotic cell, providing a more informed virtual commissioning aided by co-simulation.

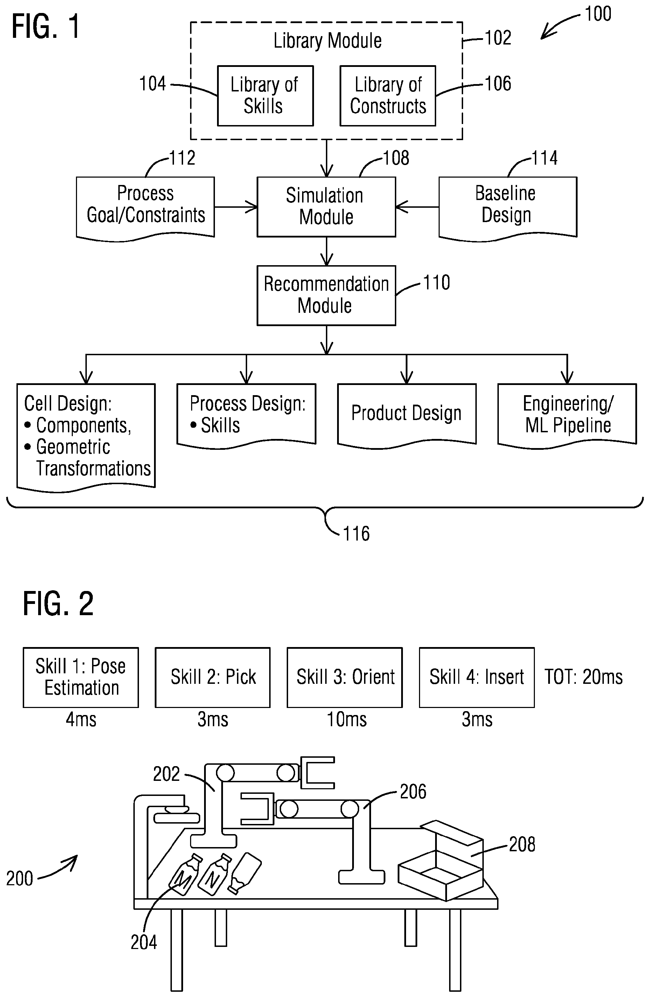

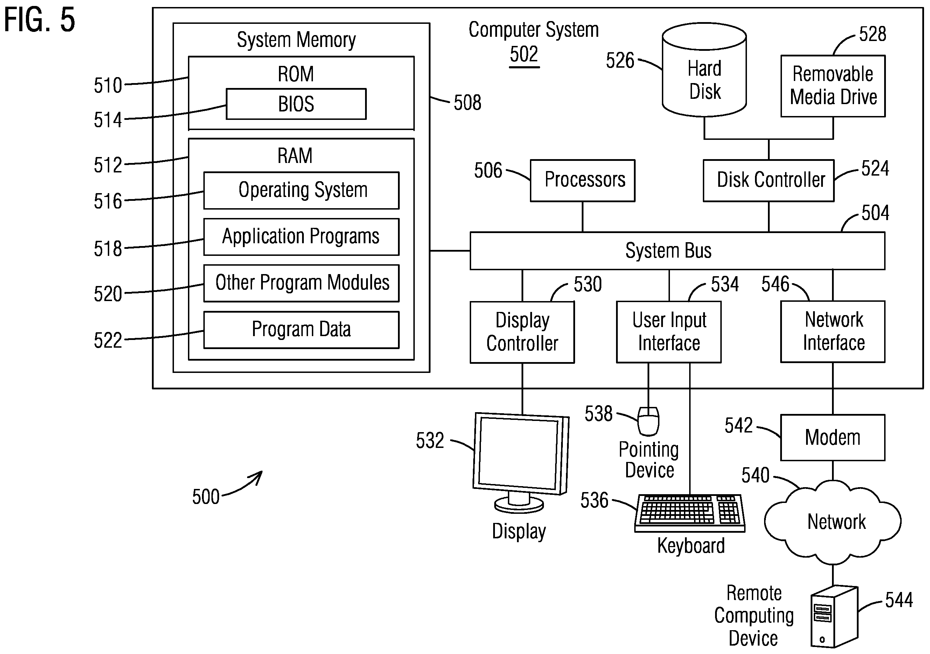

Turning now to the drawings, FIG. 1 illustrates a system 100 for designing execution of a process by a robotic cell according to an embodiment of the disclosure. The system 100 broadly comprises a library module 102 including a library of skills 104 and a library of constructs 106, a simulation module 108 and a recommendation module 110. Disclosed modules of the system 100 may be embodied in one or more computing systems. Such a computing system comprises a processor coupled to a memory. Optionally, the system may comprise a display for displaying a graphical user interface (GUI), the memory having recorded thereon a computer program comprising instructions for performing the method. The memory may also store data sets including libraries as described herein. The memory is any hardware adapted for such storage, possibly comprising several physical distinct parts (e.g. one for the program, and possibly one for the database). An example embodiment of a computing environment is illustrated with reference to FIG. 5.

The disclosed method in connection the system 100 is computer-implemented. This means that steps (or substantially all the steps) of the disclosed method are executed by at least one computer or computing system. Thus, the disclosed steps are performed by the computer, possibly fully automatically, or, semi-automatically. In examples, the triggering of at least some of the steps of the disclosed method may be performed through user-computer interaction. The level of user-computer interaction required may depend on the level of automatism foreseen and put in balance with the need to implement user's wishes. In examples, this level may be user-defined and/or pre-defined.

Continuing with reference to FIG. 1, the library of skills 104 may comprise a set of skills that one or more robots available in the robotic cell are capable of executing. Each skill in the library of skills 104 includes a functional description for using a robot of the robotic cell to interact with a physical environment to perform a skill objective. In one implementation, the library of skills 104 may comprise the skill code for each individual skill. In various embodiments, the skill code may include a machine-learning model and/or a machine vision algorithm. In another implementation, instead of the actual skill codes, the library of skills 104 may be provided with an explicit characterization of individual skills. Such a characterization may include one or more skill performance parameters of the individual skills, such as execution time, error-rate, cost, etc., in addition to the functional description of the skill.

The library of constructs 106 includes digital representations of available components of the robotic cell and/or different geometric transformations of the robotic cell. Components of the robotic cell may include, for example, one or more types of robots, fixtures, grippers, feeders, etc. Geometric transformations may include different geometrical layouts of the robotic cell, such as camera placement, input object orientation, and so on. The digital representation of a construct may include, for example, a CAD model containing specifications from which geometry may be generated. In other embodiments, instead of or in addition to employing CAD models, sensor data, such as imaging data, may be utilized to generate digital representations of the constructs.

The simulation module 108 may be available, for example, as part of a digital twin of the robotic cell, which provides a high-fidelity digital model of the robotic cell by utilizing digital representations (e.g., CAD models) of the physical components and geometrical layout of the cell. The simulation module 108 comprises a physics-based simulation engine (also referred to as "physics engine") configured to simulate the execution of a process by the robotic cell. The execution of a process by the robotic cell includes execution of one or more skills (typically a combination of skills) by at least one robot, to achieve a process goal, in a physical environment defined by a combination of constructs which represent the mechanical design of the cell.

The disclosed embodiments utilize the simulation module 108 to generate a set of designs to achieve a specified process goal based on one or more specified process constraints. A process goal defines an overall goal or mission of the process (such as packaging bottles in a box, in the example shown in FIG. 2). A process constraint may define an acceptable range of a performance parameter (e.g., execution time, error-rate, cost, etc.) for the overall process. In one embodiment, the process goal and the one or more process constraints are obtained based on an input 112 via a user interface (e.g., a GUI). In other embodiments, the same input 112 may be obtained automatically based on information already stored on a memory of the computing system.

Based on the information accessed from the library module 102, the simulation module 108 uses the simulation engine to simulate a multiplicity of designs where each design is characterized by a combination of constructs and skills to achieve the process goal. The simulation of each design involves measuring an overall performance of the design, that is, measuring one or more performance parameters of the overall process executed using the design. In a first implementation, the simulation engine may execute (i.e., activate or call as a function) a skill code of each individual skill included in the design, to measure one or more skill performance parameters that individual skill, and therefrom measure the overall design performance. In a second implementation, the simulation engine may measure the overall design performance based on one or more skill performance parameters of each individual skill included in the design that are explicitly specified in the library of skills. On the basis of the measured overall design performance, a set of feasible designs are obtained that meet the specified process constraint(s).

In one embodiment, the simulation module 108 may be configured to generate the designs for simulation based on a process of generative design. To that end, the simulation module 108 may include a machine-learning based generative model, for example, comprising a neural network, to generate the designs based on the specified process constraint(s). An initial phase of training may include an iterative process of: using the generative model to generate designs using combinations of skills and constructs (from the library of skills 104 and library of constructs 106 respectively) to achieve the process goal that are simulated by the simulation engine to measure the overall design performance; and tuning the model parameters (e.g., weights, biases of the neural network) such that the measured overall design performance meets the specified constraint(s). In a subsequent phase, the generative model may be used to generate, using available skills from the library of skills 104 and available constructs and library of constructs 106, a number of feasible designs that achieve the process goal meeting the process constraint(s).

In the disclosed embodiment, as shown in FIG. 1, the designs for simulation are generated (by generative design or other techniques) by generating optimal transformations of a baseline design 114. The baseline design may typically include a current system design of the robotic cell, or another reference design. Transformations of the baseline design may be generated by identifying at least one bottleneck skill in the baseline design. A bottleneck skill is identified as a skill whose execution introduces maximum constraints in the design, that render the design not suitable to meet the specified process constraints. The bottleneck skill(s) of the baseline design may be determined by measuring skill performance parameters at runtime, for example, by simulation or using real-world data (in case of an existing system design). Based on the identified bottleneck skill(s), transformations may be generated by shuffling the constructs relevant to the execution of the bottleneck skill(s) and/or generating other combination of skills that eliminate the bottleneck skill(s).

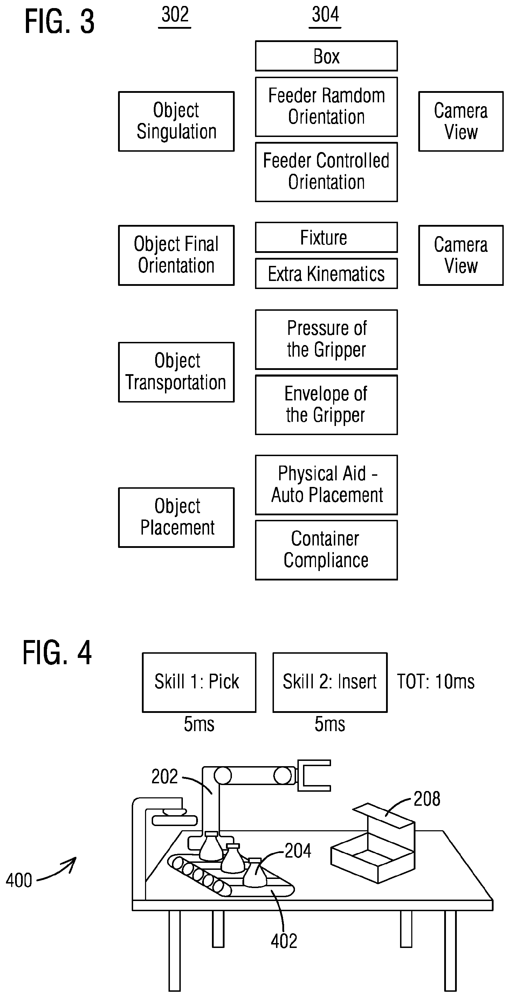

In one embodiment, the generation of designs by the simulation module 108 may be based on breaking down the process goal into technical problems and evaluating a spectrum of design parameters (constructs and/or skills) pertinent to each problem (e.g., see FIG. 3). The spectrum of design parameters pertinent to each problem may be identified based on domain expertise. In one embodiment, an artificial intelligence based expert system may be used for this purpose. For example, one of the identified technical problems may involve transportation of an object by a robot. If it is determined (e.g., by simulation or real-world data) that the object is too heavy and the gripper cannot apply enough suction, whereby the objects falls down and needs to be regrasped, the simulation module 108 may evaluate an alternative suction cup diameter or shape to maximize the suction.

The recommendation module 110 produces an output 116 derived from the set of feasible designs, for evaluation by an engineer or designer. The output 116 may be rendered via a GUI in a format that allows the user to view, and in some cases, control the execution of a simulated process based on the recommended designs. The output 116 of the recommendation module 110 typically comprises a handful of design options that a human designer is able to review. Each design option is characterized by a combination of constructs (mechanical hardware of the cell) and skills.

In some embodiments, a very large number of feasible designs may be generated by the simulation module 108, in which case the recommendation module 110 may selectively output only a small subset of the set of feasible designs. In one example embodiment, the recommendation module 110 may comprise algorithms to fine-tune the feasible region, for example, by selecting specific designs or changing input values (e.g., constraints). In the present invention, the recommendation module 110 comprises a clustering algorithm to cluster designs that are substantially similar to each other and output only one representative design for a cluster of designs.

If there is no apparatus in the library of constructs 106 that can perform a transformation, the recommendation module 110 may indicate the same in the output 116. A designer can later on design such a component and add it to the cell.

In various embodiments, other feedback loops to different production stages may be established that can simplify or speed up the work of the robotic cell. One example would be to provide automatic feedback to product design. Another example would be to provide automatic feedback to an engineering/ machine-learning pipeline.

In one embodiment, the output 116 of the recommendation module 110 may include specific recommendations based on the execution of the skill code of the identified bottleneck skill(s). In a first example embodiment, the skill code of a bottleneck skill may be based on a machine vision algorithm. A bottleneck may be caused by such a skill, for instance, because of false detections that reduce the average throughput. Execution of the skill code in this case includes simulating image capture by a camera. In this case, the recommendation module 110 may output a recommendation to change a design of a product being handled by the robotic cell. For instance, the recommendation may be to include a distinctive feature in the product design so that it is more easily recognized by the machine vision algorithm. In a second example embodiment, the skill code of a bottleneck skill may be based on a machine-learning model. For instance, the skill code of a "pick" skill may be based on deep learning methods. A bottleneck may be caused by such a skill, for example, due to difficulties predicting successful picks for a specific object, which in turn delays the overall operation. In this case, the recommendation module 110 may output a recommendation to re-train the machine learning model. For instance, the recommendation may be to use a different set of images or objects for training the machine-learning model for the "pick" skill.

The above-disclosed method may be better understood based on an illustrative example referring to FIG. 2 -4.

FIG. 2 shows a baseline design 200 of a robotic cell for executing a process of packaging bottles. The top portion of the drawing depicts the skills that are used in the baseline design 200 to achieve the process goal, which is to package bottles into a box, along with the respective execution time for each skill. The bottom portion of the drawing shows the mechanical design of the robotic cell as per the baseline design 200. As the final orientation of the bottle is important, the autonomous system needs to first recognize the orientation of the bottle, then it needs to pick it, calculate the final orientation and perform a re-orientation action with the help of a second robot, and finally insert the bottle in the box. As shown in FIG. 2, a first robot 202 executes skill 1 (pose estimation) to recognize the input orientation of a bottle 204 and skill 2 (pick) to pick up the bottle 204. The first robot 202, in combination with a second robot 206, then execute skill 3 (orient) to achieve a desired final orientation of the bottle 204. The second robot 206 finally executes skill 4 (insert) to insert the bottle 204 into a box 208 in the final orientation.

As bottles can have any input orientation, the autonomous system has maximum flexibility, paying the price of speed. Let us assume that a process constraint is introduced to limit overall process execution time to 10ms. The baseline design 200 has a process execution time of 20ms and hence no longer meets the specified process constraint. The disclosed method may be used to find optimal transformations of the baseline design 200 to increase speed by reducing flexibility, using a library of skills and constructs (including potential devices and geometric transformations). In the example of FIG. 2, it may be determined that the pose estimation and orientation skills are slowing down the operation and are hence identified as bottleneck skills. Having identified the bottleneck skills, the disclosed method finds ways geometrically through a simulation of all the library components to facilitate the task, or even remove the need of those bottleneck skills in the first place. The method may involve generatively simulating thousands or millions of combinations and returning a handful of tentative designs for a designer to evaluate.

FIG. 3 illustrates an example of a spectrum of design parameters evaluated by the system based on the process goal of the illustrative example of FIG. 2. The items on the leftmost column 302 refer to specific problems that the overall process goal may be broken down into. The items in columns 304 comprise design parameters that are pertinent to the respective problems.

FIG. 4 illustrates one example of a recommended design 400 of the robotic cell for carrying out the same process goal as in FIG. 2. The design 400 may be generated, for example, by evaluating a design spectrum as shown in FIG. 3, to shuffle constructs around the identified bottleneck skills and/or eliminate these bottleneck skills. As per this recommended design 400, a feeder 402 is introduced at the input to automatically rotate the bottles 204 to a desired orientation to achieve the desired final orientation. This eliminates the need for a second robot in the design 400, and also eliminates the bottleneck skills identified in the baseline design 200. The combination of constructs and skills in the design 400 meet the specified process constraint by trading off flexibility to achieve higher speed or throughput.

The disclosed embodiments provide better transparency to system integrators and end users of the robotic cell of the constraints imposed by the usage of autonomous skills, and its link to the mechanical design of the cell. The disclosed embodiments will lead to several technical benefits, including modular architecture, optimal mechanical-software design and reduced costs. This is anticipated to impact significantly current trends such as skill-based programming of autonomous systems.

FIG. 5 illustrates an exemplary computing environment comprising a computer system 502, within which aspects of the present disclosure may be implemented. In one embodiment, the computing environment may comprise a cloud computing environment including one or more computing systems as described herein. Computers and computing environments, such as computer system 502 and computing environment 500, are known to those of skill in the art and thus are described briefly here.

As shown in FIG. 5, the computer system 502 may include a communication mechanism such as a system bus 504 or other communication mechanism for communicating information within the computer system 502. The computer system 502 further includes one or more processors 506 coupled with the system bus 504 for processing the information. The processors 506 may include one or more central processing units (CPUs), graphical processing units (GPUs), or any other processor known in the art.

The computer system 502 also includes a system memory 508 coupled to the system bus 504 for storing information and instructions to be executed by processors 506. The system memory 508 may include computer readable storage media in the form of volatile and/or nonvolatile memory, such as read only memory (ROM) 510 and/or random access memory (RAM) 512. The system memory RAM 512 may include other dynamic storage device(s) (e.g., dynamic RAM, static RAM, and synchronous DRAM). The system memory ROM 510 may include other static storage device(s) (e.g., programmable ROM, erasable PROM, and electrically erasable PROM). In addition, the system memory 508 may be used for storing temporary variables or other intermediate information during the execution of instructions by the processors 506. A basic input/output system 514 (BIOS) containing the basic routines that help to transfer information between elements within computer system 502, such as during start-up, may be stored in system memory ROM 510. System memory RAM 512 may contain data and/or program modules that are immediately accessible to and/or presently being operated on by the processors 506. System memory 508 may additionally include, for example, operating system 516, application programs 518, other program modules 520 and program data 522.

The computer system 502 also includes a disk controller 524 coupled to the system bus 504 to control one or more storage devices for storing information and instructions, such as a magnetic hard disk 526 and a removable media drive 528 (e.g., floppy disk drive, compact disc drive, tape drive, and/or solid state drive). The storage devices may be added to the computer system 502 using an appropriate device interface (e.g., a small computer system interface (SCSI), integrated device electronics (IDE), Universal Serial Bus (USB), or FireWire).

The computer system 502 may also include a display controller 530 coupled to the system bus 504 to control a display 532, such as a cathode ray tube (CRT) or liquid crystal display (LCD), among other, for displaying information to a computer user. The computer system 502 includes a user input interface 534 and one or more input devices, such as a keyboard 536 and a pointing device 538, for interacting with a computer user and providing information to the one or more processors 506. The pointing device 538, for example, may be a mouse, a light pen, a trackball, or a pointing stick for communicating direction information and command selections to the one or more processors 506 and for controlling cursor movement on the display 532. The display 532 may provide a touch screen interface which allows input to supplement or replace the communication of direction information and command selections by the pointing device 538.

The computing system 502 also includes an I/O adapter 546 coupled to the system bus 504 to connect the computing system 502 to a controllable physical device, such as a robot. In the example shown in FIG. 5, the I/O adapter 546 is connected to robot controller 548, which includes, for example, one or more motors for controlling linear and/or angular positions of various parts (e.g., arm, base, etc.) of the physical device or robot.

The computer system 502 may perform a portion or all of the processing steps of embodiments of the disclosure in response to the one or more processors 506 executing one or more sequences of one or more instructions contained in a memory, such as the system memory 508. Such instructions may be read into the system memory 508 from another computer readable storage medium, such as a magnetic hard disk 526 or a removable media drive 528. The magnetic hard disk 526 may contain one or more datastores and data files used by embodiments of the present disclosure. Datastore contents and data files may be encrypted to improve security. The processors 506 may also be employed in a multi-processing arrangement to execute the one or more sequences of instructions contained in system memory 508. In alternative embodiments, hard-wired circuitry may be used in place of or in combination with software instructions. Thus, embodiments are not limited to any specific combination of hardware circuitry and software.

The computer system 502 may include at least one computer readable storage medium or memory for holding instructions programmed according to embodiments of the disclosure and for containing data structures, tables, records, or other data described herein. The term "computer readable storage medium" as used herein refers to any medium that participates in providing instructions to the one or more processors 506 for execution. A computer readable storage medium may take many forms including, but not limited to, non-transitory, non-volatile media, volatile media, and transmission media. Non-limiting examples of non-volatile media include optical disks, solid state drives, magnetic disks, and magneto-optical disks, such as magnetic hard disk 526 or removable media drive 528. Non-limiting examples of volatile media include dynamic memory, such as system memory 508. Non-limiting examples of transmission media include coaxial cables, copper wire, and fiber optics, including the wires that make up the system bus 504. Transmission media may also take the form of acoustic or light waves, such as those generated during radio wave and infrared data communications.

The computing environment 500 may further include the computer system 502 operating in a networked environment using logical connections to one or more remote computers, such as remote computing device 544. Remote computing device 544 may be a personal computer (laptop or desktop), a mobile device, a server, a router, a network PC, a peer device or other common network node, and typically includes many or all of the elements described above relative to computer system 502. When used in a networking environment, computer system 502 may include a modem 542 for establishing communications over a network 540, such as the Internet. Modem 542 may be connected to system bus 504 via network interface 546, or via another appropriate mechanism.

Network 540 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 502 and other computers (e.g., remote computing device 544). The network 540 may be wired, wireless or a combination thereof. Wired connections may be implemented using Ethernet, Universal Serial Bus (USB), RJ-6, or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 540.

The embodiments of the present disclosure may be implemented with any combination of hardware and software. In addition, the embodiments of the present disclosure may be included in an article of manufacture (e.g., one or more computer program products) having, for example, a non-transitory computer-readable storage medium. The computer readable storage medium has embodied therein, for instance, computer readable program instructions for providing and facilitating the mechanisms of the embodiments of the present disclosure. The article of manufacture can be included as part of a computer system or sold separately.

The computer readable storage medium can include a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. Computer readable program instructions described herein can be downloaded to respective computing/processing devices from a computer readable storage medium or to an external computer or external storage device via a network, for example, the Internet, a local area network, a wide area network and/or a wireless network.

The system and processes of the figures are not exclusive. Other systems, processes and menus may be derived in accordance with the principles of the disclosure to accomplish the same objectives. Although this disclosure has been described with reference to particular embodiments, it is to be understood that the embodiments and variations shown and described herein are for illustration purposes only.

## Claims

1. A computer-implemented method for designing execution of a process by a robotic cell, comprising:
obtaining a process goal and one or more process constraints,
accessing a library of constructs (106), each construct comprising a digital representation of a component of the robotic cell or a geometric transformation of the robotic cell,
accessing a library of skills (104), each skill being represented by an individual programming block and comprising a functional description for using a robot of the robotic cell to interact with a physical environment to perform a skill objective,
generating a multiplicity of designs for simulation by generating transformations of a baseline design (114), wherein the baseline design includes a current system design of the robotic cell, or another reference design;
wherein each design is **characterized by** a combination of constructs and skills to achieve the process goal;
using a simulation engine to simulate the multiplicity of designs, wherein the simulation of each design involves measuring an overall performance of the simulated design, that is, measuring one or more performance parameters of the overall process executed using the simulated design,
on the basis of the measured overall design performance, a set of feasible designs are obtained that meet the specified one or more process constraints; and
applying a clustering algorithm by a recommendation module (110) to cluster designs that are substantially similar to each other; and
outputting recommended designs from the set of feasible designs, wherein only one representative design for a cluster of designs is output.

2. The method according to claim 1, wherein the simulation engine comprises a machine-learning based generative model to generate the designs for simulation based on the one or more process constraints.

3. The method according to any of claims 1 and 2, comprising generating the designs for simulation by generating transformations of a baseline design (114) including a current or another reference design based on identifying at least one bottleneck skill in the baseline design (114), the bottleneck skill being a skill whose execution introduces maximum constraints in the design.

4. The method according to claim 3, comprising outputting a recommendation based on execution of the programming block of the bottleneck skill.

5. The method according to claim 4, wherein the programming block of the bottleneck skill is based on a machine vision algorithm, and wherein the recommendation includes a change in design of a product being handled by the robotic cell.

6. The method according to claim 4, wherein the programming block of the bottleneck skill is based on a machine-learning model, and wherein the recommendation includes a re-training of the machine learning model.

7. The method according to any of claims 1 to 3, wherein simulating each design by the simulation engine comprises measuring an overall performance of the design based on one or more skill performance parameters of each individual skill included in the design that are explicitly specified in the library of skills.

8. The method according to any of claims 1 to 6, wherein simulating each design by the simulation engine comprises executing the programming block of each individual skill included in the design, to measure one or more skill performance parameters that individual skill, and therefrom measure an overall performance of the design.

9. The method according to any of claims 7 and 8, wherein the one or more skill performance parameters are selected from the group consisting of: execution time, error-rate and cost.

10. A non-transitory computer-readable storage medium including instructions that, when processed by a computer, configure the computer to perform the method according to any of claims 1 to 9.

11. A computer program product comprising instructions which, when the instructions are executed by a computing apparatus, cause the computing apparatus to execute a method according to any of claims 1 to 9.

12. A system (100) for designing execution of a process by a robotic cell, comprising:
a library module comprising:
a library of constructs (106), each construct comprising a digital representation of a component of the robotic cell or a geometric transformation of the robotic cell,
a library of skills (104), each skill being represented by an individual programming block and comprising a functional description for using a robot of the robotic cell to interact with a physical environment to perform a skill objective, and
a simulation module (108) comprising a simulation engine configured to
generate a multiplicity of designs for simulation by generating transformations of a baseline design (114), wherein the baseline design includes a current system design of the robotic cell or another reference design,
simulate the multiplicity of designs, wherein the simulation of each design involves measuring an overall performance of the simulated design, that is, measuring one or more performance parameters of the overall process executed using the simulated design, and
obtain a set of feasible designs that meet one or more specified process constraints based on the measured overall performance, and
a recommendation module (110) configured to cluster, by a clustering algorithm, designs that are substantially similar to each other output recommended designs from the set of feasible designs wherein only one representative design for a cluster of designs is output.

13. The system according to claim 12, wherein the simulation module (108) comprises a machine-learning based generative model to generate the designs for simulation based on the one or more process constraints.

14. The system according to any of claims 12 and 13, wherein the simulation module (108) is configured to generate the designs for simulation by generating transformations of a baseline design (114) including a current or reference design of the robotic cell based on identifying at least one bottleneck skill in the baseline design (114), the bottleneck skill being a skill whose execution introduces maximum constraints in the design.

15. The system according to claim 14, wherein the recommendation module (110) is configured to output a recommendation based on execution of the programming block of the bottleneck skill.

## Patentansprüche

1. Computerimplementiertes Verfahren zum Entwerfen der Ausführung eines Prozesses durch eine Roboterzelle, wobei das Verfahren Folgendes umfasst:
Erhalten eines Prozessziels und einer oder mehrerer Prozessbeschränkungen,
Zugreifen auf eine Bibliothek von Konstrukten (106), wobei jedes Konstrukt eine digitale Darstellung einer Komponente der Roboterzelle oder eine geometrische Transformation der Roboterzelle umfasst,
Zugreifen auf eine Bibliothek von Fähigkeiten (104), wobei jede Fähigkeit durch einen einzelnen Programmierblock dargestellt wird und eine Funktionsbeschreibung zur Verwendung eines Roboters der Roboterzelle zum Zusammenwirken mit einer physischen Umgebung, um ein Fähigkeitsziel auszuführen, umfasst, Erzeugen einer Vielfalt von Entwürfen für die Simulation durch Erzeugen von Transformationen eines Grundentwurfs (114), wobei der Grundentwurf einen aktuellen Systementwurf der Roboterzelle oder einen anderen Referenzentwurf enthält;
wobei jeder Entwurf durch eine Kombination von Konstrukten und Fähigkeiten zum Erzielen des Prozessziels charakterisiert ist;
Verwenden einer Simulations-Engine zum Simulieren der Vielfalt von Entwürfen, wobei die Simulation jedes Entwurfs das Messen einer Gesamtleistung des simulierten Entwurfs, d. h. das Messen eines oder mehrerer Leistungsparameter des unter Verwendung des simulierten Entwurfs ausgeführten Gesamtprozesses, umfasst,
wobei auf der Grundlage der gemessenen Gesamtentwurfsleistung eine Menge möglicher Entwürfe, die die eine oder die mehreren spezifizierten Prozessbeschränkungen erfüllen, erhalten werden; und
Anwenden eines Clusterungs-Algorithmus durch ein Empfehlungsmodul (110) zum Clustern von Entwürfen, die im Wesentlichen zueinander ähnlich sind; und
Ausgeben empfohlener Entwürfe von der Menge möglicher Entwürfe, wobei für einen Cluster von Entwürfen nur ein repräsentativer Entwurf ausgegeben wird.

2. Verfahren nach Anspruch 1, wobei die Simulations-Engine ein generatives Modell auf der Grundlage von maschinellem Lernen umfasst, um auf der Grundlage der einen oder der mehreren Prozessbeschränkungen die Entwürfe für die Simulation zu erzeugen.

3. Verfahren nach einem der Ansprüche 1 und 2, das das Erzeugen der Entwürfe für die Simulation durch Erzeugen von Transformationen eines Grundentwurfs (114), der einen aktuellen Entwurf oder einen anderen Referenzentwurf enthält, auf der Grundlage des Identifizierens wenigstens einer Engpassfähigkeit in dem Grundentwurf (114) umfasst, wobei die Engpassfähigkeit eine Fähigkeit ist, deren Ausführung maximale Beschränkungen in den Entwurf einführt.

4. Verfahren nach Anspruch 3, das das Ausgeben einer Empfehlung auf der Grundlage der Ausführung des Programmierblocks der Engpassfähigkeit umfasst.

5. Verfahren nach Anspruch 4, wobei der Programmierblock der Engpassfähigkeit auf einem Algorithmus des maschinellen Sehens beruht und wobei die Empfehlung eine Änderung des Entwurfs eines durch die Roboterzelle behandelten Produkts enthält.

6. Verfahren nach Anspruch 4, wobei der Programmierblock der Engpassfähigkeit auf einem Modell des maschinellen Lernens beruht und wobei die Empfehlung ein erneutes Trainieren des Modells für maschinelles Lernen enthält.

7. Verfahren nach einem der Ansprüche 1 bis 3, wobei das Simulieren jedes Entwurfs durch die Simulations-Engine das Messen einer Gesamtleistung des Entwurfs auf der Grundlage eines oder mehrerer Fähigkeitsleistungsparameter jeder einzelnen in dem Entwurf enthaltenen Fähigkeit, die in der Bibliothek von Entwürfen explizit spezifiziert sind, umfasst.

8. Verfahren nach einem der Ansprüche 1 bis 6, wobei das Simulieren jedes Entwurfs durch die Simulations-Engine das Ausführen des Programmierblocks jeder einzelnen in dem Entwurf enthaltenen Fähigkeit zum Messen eines oder mehrerer Fähigkeitsleistungsparameter dieser einzelnen Fähigkeit und davon zum Messen einer Gesamtleistung des Entwurfs umfasst.

9. Verfahren nach einem der Ansprüche 7 und 8, wobei der eine oder die mehreren Fähigkeitsleistungsparameter aus der Gruppe gewählt werden, die aus Folgendem besteht: Ausführungszeit, Fehlerrate und Kosten.

10. Nichttransitorisches computerlesbares Speichermedium, das Anweisungen enthält, die, wenn sie durch einen Computer verarbeitet werden, den Computer konfigurieren, das Verfahren nach einem der Ansprüche 1 bis 9 auszuführen.

11. Computerprogrammprodukt, das Anweisungen umfasst, die, wenn die Anweisungen durch eine Computervorrichtung ausgeführt werden, veranlassen, dass die Computervorrichtung ein Verfahren nach einem der Ansprüche 1 bis 9 ausführt.

12. System (100) zum Entwerfen der Ausführung eines Prozesses durch eine Roboterzelle, wobei das System Folgendes umfasst:
ein Bibliotheksmodul, das Folgendes umfasst:
eine Bibliothek von Konstrukten (106), wobei jedes Konstrukt eine digitale Darstellung einer Komponente der Roboterzelle oder eine geometrische Transformation der Roboterzelle umfasst,
eine Bibliothek von Fähigkeiten (104), wobei jede Fähigkeit durch einen einzelnen Programmierblock dargestellt wird und eine Funktionsbeschreibung zur Verwendung eines Roboters der Roboterzelle zum Zusammenwirken mit einer physischen Umgebung, um ein Fähigkeitsziel auszuführen, umfasst, und ein Simulationsmodul (108), das eine Simulations-Engine umfasst, die konfiguriert ist zum:
Erzeugen einer Vielfalt von Entwürfen für die Simulation durch Erzeugen von Transformationen eines Grundentwurfs (114), wobei der Grundentwurf einen aktuellen Systementwurf der Roboterzelle oder einen anderen Referenzentwurf enthält;
Simulieren der Vielfalt von Entwürfen, wobei die Simulation jedes Entwurfs das Messen einer Gesamtleistung des simulierten Entwurfs, d. h. das Messen eines oder mehrerer Leistungsparameter des unter Verwendung des simulierten Entwurfs ausgeführten Gesamtprozesses, umfasst, und
Erhalten einer Menge möglicher Entwürfe, die auf der Grundlage der gemessenen Gesamtleistung eine oder mehrere spezifizierte Prozessbeschränkungen erfüllen, und
ein Empfehlungsmodul (110), das konfiguriert ist, Entwürfe, die im Wesentlichen zueinander ähnlich sind, durch einen Clusterungsalgorithmus zu clustern empfohlene Entwürfe aus der Menge möglicher Entwürfe ausgeben, wobei für einen Cluster von Entwürfen nur ein repräsentativer Entwurf ausgegeben wird.

13. System nach Anspruch 12, wobei das Simulationsmodul (108) ein generatives Modell auf der Grundlage von maschinellem Lernen umfasst, um auf der Grundlage der einen oder mehreren Prozessbeschränkungen die Entwürfe für die Simulation zu erzeugen.

14. System nach einem der Ansprüche 12 und 13, wobei das Simulationsmodul (108) konfiguriert ist, die Entwürfe für die Simulation durch Erzeugen von Transformationen eines Grundentwurfs (114), der einen aktuellen Entwurf oder einen Referenzentwurf der Roboterzelle enthält, auf der Grundlage des Identifizierens wenigstens einer Engpassfähigkeit in dem Grundentwurf (114) zu erzeugen, wobei die Engpassfähigkeit eine Fähigkeit ist, deren Ausführung maximale Beschränkungen in den Entwurf einführt.

15. System nach Anspruch 14, wobei das Empfehlungsmodul (110) konfiguriert ist, auf der Grundlage der Ausführung des Programmierblocks der Engpassfähigkeit eine Empfehlung auszugeben.

## Revendications

1. Procédé, mis en œuvre par ordinateur, de conception de l'exécution d'un processus par une cellule robotisée, comprenant :
l'obtention d'un objectif de processus et d'une ou de plusieurs contraintes de processus,
l'accès à une bibliothèque de construits (106), chaque construit comprenant une représentation numérique d'un composant de la cellule robotisée ou une transformation géométrique de la cellule robotisée,
l'accès à une bibliothèque de compétences (104), chaque compétence étant représentée par un bloc de programmation individuel et comprenant une description fonctionnelle permettant d'utiliser un robot de la cellule robotisée pour interagir avec un environnement physique afin de réaliser un objectif de compétence,
la génération d'une pluralité de conceptions pour la simulation par génération de transformations d'une conception de base (114), la conception de base comportant une conception système courante de la cellule robotisée ou une autre conception de référence ;
chaque conception étant **caractérisée par** une combinaison de construits et de compétences permettant d'atteindre l'objectif de processus ;
l'utilisation d'un moteur de simulation pour simuler la pluralité de conceptions, la simulation de chaque conception comprenant la mesure d'une performance globale de la conception simulée, c'est-à-dire la mesure d'un ou de plusieurs paramètres de performance du processus global exécuté à l'aide de la conception simulée,
l'obtention, sur la base de la performance globale mesurée de la conception, d'un ensemble de conceptions réalisables répondant à la ou aux contraintes de processus spécifiées ; et
l'application, par un module de recommandation (110), d'un algorithme de groupement afin de grouper des conceptions qui sont sensiblement similaires entre elles ; et
la fourniture en sortie de conceptions recommandées issues de l'ensemble de conceptions réalisables, une seule conception représentative pour un groupe de conceptions étant fournie en sortie.

2. Procédé selon la revendication 1, dans lequel le moteur de simulation comprend un modèle génératif basé sur l'apprentissage automatique destiné à générer les conceptions pour la simulation sur la base de la ou des contraintes de processus.

3. Procédé selon l'une quelconque des revendications 1 et 2, comprenant la génération des conceptions pour la simulation par génération de transformations d'une conception de base (114) comportant une conception courante ou une autre conception de référence sur la base de l'identification d'au moins une compétence constituant un goulot d'étranglement dans la conception de base (114), la compétence constituant un goulot d'étranglement étant une compétence dont l'exécution introduit des contraintes maximales dans la conception.

4. Procédé selon la revendication 3, comprenant la fourniture en sortie d'une recommandation sur la base de l'exécution du bloc de programmation de la compétence constituant un goulot d'étranglement.

5. Procédé selon la revendication 4, dans lequel le bloc de programmation de la compétence constituant un goulot d'étranglement est basé sur un algorithme de vision artificielle, et dans lequel la recommandation comprend une modification de la conception d'un produit manipulé par la cellule robotisée.

6. Procédé selon la revendication 4, dans lequel le bloc de programmation de la compétence constituant un goulot d'étranglement est basé sur un modèle d'apprentissage automatique, et dans lequel la recommandation comprend un réentraînement du modèle d'apprentissage automatique.

7. Procédé selon l'une quelconque des revendications 1 à 3, dans lequel la simulation de chaque conception par le moteur de simulation comprend la mesure d'une performance globale de la conception sur la base d'un ou de plusieurs paramètres de performance de compétence de chaque compétence individuelle comprise dans la conception qui sont explicitement spécifiés dans la bibliothèque de compétences.

8. Procédé selon l'une quelconque des revendications 1 à 6, dans lequel la simulation de chaque conception par le moteur de simulation comprend l'exécution du bloc de programmation de chaque compétence individuelle comprise dans la conception, afin de mesurer un ou plusieurs paramètres de performance de compétence de cette compétence individuelle, et, à partir de ceux-ci, mesurer une performance globale de la conception.

9. Procédé selon l'une quelconque des revendications 7 et 8, dans lequel le ou les paramètres de performance de compétence sont sélectionnés dans le groupe constitué par : le temps d'exécution, le taux d'erreur et le coût.

10. Support de stockage non transitoire lisible par ordinateur comportant des instructions qui, lorsqu'elles sont traitées par un ordinateur, configurent l'ordinateur pour lui faire réaliser le procédé selon l'une quelconque des revendications 1 à 9.

11. Produit programme d'ordinateur comprenant des instructions qui, lorsque les instructions sont exécutées par un appareil informatique, amènent l'appareil informatique à exécuter un procédé selon l'une quelconque des revendications 1 à 9.

12. Système (100) de conception de l'exécution d'un processus par une cellule robotisée, comprenant :
un module de bibliothèques comprenant :
une bibliothèque de construits (106), chaque construit comprenant une représentation numérique d'un composant de la cellule robotisée ou une transformation géométrique de la cellule robotisée,
une bibliothèque de compétences (104), chaque compétence étant représentée par un bloc de programmation individuel et comprenant une description fonctionnelle permettant d'utiliser un robot de la cellule robotisée pour interagir avec un environnement physique afin de réaliser un objectif de compétence, et un module de simulation (108) comprenant un moteur de simulation configuré pour
générer une pluralité de conceptions pour la simulation par génération de transformations d'une conception de base (114), la conception de base comportant une conception système courante de la cellule robotisée ou une autre conception de référence,
simuler la pluralité de conceptions, la simulation de chaque conception comprenant la mesure d'une performance globale de la conception simulée, c'est-à-dire la mesure d'un ou de plusieurs paramètres de performance du processus global exécuté à l'aide de la conception simulée, et
obtenir un ensemble de conceptions réalisables répondant à une ou plusieurs contraintes de processus spécifiées sur la base de la performance globale mesurée, et
un module de recommandation (110) configuré pour grouper, par un algorithme de groupement, des conceptions qui sont sensiblement similaires entre elles fournir en sortie des conceptions recommandées issues de l'ensemble de conceptions réalisables, une seule conception représentative pour un groupe de conceptions étant fournie en sortie.

13. Système selon la revendication 12, dans lequel le module de simulation (108) comprend un modèle génératif basé sur l'apprentissage automatique destiné à générer les conceptions pour la simulation sur la base de la ou des contraintes de processus.

14. Système selon l'une quelconque des revendications 12 et 13, dans lequel le module de simulation (108) est configuré pour générer les conceptions pour la simulation en générant des transformations d'une conception de base (114) comportant une conception courante ou de référence de la cellule robotisée sur la base de l'identification d'au moins une compétence constituant un goulot d'étranglement dans la conception de base (114), la compétence constituant un goulot d'étranglement étant une compétence dont l'exécution introduit des contraintes maximales dans la conception.

15. Système selon la revendication 14, dans lequel le module de recommandation (110) est configuré pour fournir en sortie une recommandation sur la base de l'exécution du bloc de programmation de la compétence constituant un goulot d'étranglement.
